# EUROPÄISCHE PATENTSCHRIFT

(11) **EP 1 031 144 B1**
(45) Veröffentlichungstag und Bekanntmachung des Hinweises auf die Patenterteilung: **19.07.2006**
(21) Anmeldenummer: 97951191.2
(22) Anmeldetag: 13.11.1997
(51) Int. Cl.: G11B 7/26, G11B 23/40, G11B 7/24

(54) **VERFAHREN ZUM HERSTELLEN EINES OPTISCHEN DATENTRÄGERS MIT DIGITALEN INFORMATIONEN UND EINEM HOLOGRAMM**
METHOD FOR PRODUCING AN OPTICAL DATA MEDIUM WITH DIGITAL INFORMATION AND A HOLOGRAM
PROCEDE POUR PRODUIRE UN SUPPORT OPTIQUE DE DONNEES COMPORTANT DES INFORMATIONS NUMERIQUES ET UN HOLOGRAMME

(43) Veröffentlichungstag der Anmeldung: 30.08.2000
(73) Patentinhaber: Sonopress GmbH, 33332 Gütersloh (DE)
(72) Erfinder: BOCK, Michael, D-33659 Bielefeld (DE); OPITZ, Rudolf, D-33332 Gütersloh (DE)
(74) Vertreter: Schaumburg, Karl-Heinz
(86) Internationale Anmeldenummer: PCT/EP1997/006343
(87) Internationale Veröffentlichungsnummer: WO 1999/026241

(56) Entgegenhaltungen:
- EP-A- 0 706 178
- EP-A- 0 762 407
- WO-A-94/10684
- WO-A-97/35307

## Beschreibung

Die Erfindung betrifft ein Verfahren zum Herstellen eines plattenförmigen optischen Datenträgers, der zwei Metallschichten enthält. Auf einer Metallschicht sind Daten in digitaler Form geschrieben. Die andere Metallschicht enthält eine für das Auge sichtbare Bildstruktur.

Das Herstellen von Compactdiscs, sogenannten CDs, sowie neuerdings von Digital Versatile Discs, sogenannten DVDs, ist mit hohem Aufwand verbunden und es entstehen dem Hersteller erhebliche Kosten. Die auf den optischen Platten geschriebenen Informationen sind im allgemeinen urheberrechtlich oder patentrechtlich geschützt. Nachdem eine optische Platte mit den auf ihr enthaltenen Informationen einmal auf den Markt gebracht ist, ist es relativ einfach, hiervon Kopien anzufertigen und diese widerrechtlich weiter zu verbreiten. Um sich vor Produktpiraterie zu schützen, werden optische Platten mit zusätzlichen Bildinformationen versehen, die von Produktpiraten nur schwer zu kopieren sind. In letzter Zeit wurde versucht, Hologramme auf die optischen Platten aufzuprägen. Solche Hologramme können kaum kopiert werden, so daß ein Käufer sofort erkennen kann, ob es sich um lizensierte oder nicht lizensierte Ware handelt.

Im Stand der Technik ist es bekannt, beispielsweise aus der US 4,967,286, der WO94/10684 und der EP-A-0 611 472, im Anschluß an die Daten in digitaler Form auf derselben Metallschicht ein Hologramm-Muster anzubringen. Nachteilig ist bei dieser Vorgehensweise, daß für die digitalen Daten auf dieser Metallschicht weniger Platz bleibt und somit der Speicherbereich verringert ist; z.B. wird bei Audio- oder Videoanwendungen die Spielzeit verringert. Ein weiterer Nachteil sind die erhöhten Kosten bei der Herstellung der Prägewerkzeuge, da unterschiedliche Strukturen zu verarbeiten sind; die Höhe der Pitstruktur für CDs liegt nämlich im Bereich von 0,12 µm, während die Höhe der Hologrammstruktur typischerweise im Bereich von 0,4 bis 3 µm liegt. Auch beim Spritzgußprozeß zum Herstellen von optischen Platten ist die Abformung der unterschiedlichen Muster mit unterschiedlichen Musterhöhen in einer Ebene relativ schwierig.

Aus der EP-A-0 608 358 ist ein Verfahren zum Herstellen eines plattenförmigen optischen Datenträgers bekannt, bei dem auf die Metallschicht eines Spritzlings, welche das digitale Pitmuster enthält, eine zusätzliche Beschichtung aufgebracht wird, die mit einem ein Hologrammuster tragenden Prägewerkzeug geprägt wird, ohne das darunter liegende Pitmuster zu beeinträchtigen. Beim Auslesen der digitalen Informationen wird nur die Metallschicht des Spritzlings abgetastet. Nachteilig ist, daß der Herstellprozeß kompliziert ist und erhebliche Zeit beansprucht. Daher ist dieses Verfahren für die Massenherstellung wenig geeignet.

Aus der WO-A- 97/35307 ist ein Verfahren zum Herstellen eines plattenförmigen optischen Datenträgers bekannt, bei dem zwei durch Spritzgießen hergestellte Platten miteinander verklebt werden. Die eine Platte trägt eine Informationsschicht, deren digitale Informationen ausgelesen werden können. Die andere Platte trägt eine Hologrammschicht. Der Oberbegriff des Anspruchs 1 basiert auf dieser Patentschrift. Weiterhin wird als relevanter Stand der Technik auf die EP-A- 0 762 407 hingewiesen.

Es ist Aufgabe der Erfindung, ein Verfahren zum Herstellen eines plattenförmigen optischen Datenträgers anzugeben, der einfach und schnell herzustellen ist, sich für die Massenfertigung eignet und die Produktpiraterie erschwert.

Diese Aufgabe wird durch die Verfahrensschritte des Patentanspruchs 1 gelöst. Vorteilhafte Weiterbildungen sind in den abhängigen Ansprüchen angegeben.

Gemäß der Erfindung werden zwei Platten, die auch als Halbplatten bezeichnet werden, miteinander durch eine Klebeschicht verbunden. Die Bildstruktur liegt im Inneren der so geschaffenen Gesamtplatte. Demgemäß ist es für einen Produktpiraten schwierig bzw. unmöglich, das Zusatzmerkmal der Bildstruktur in identischer Weise aufzubringen, so daß ein Käufer schnell erkennen kann, ob es sich um eine Originalware oder um eine widerrechtlich kopierte Ware handelt. Das Herstellen der ersten Platte und der zweiten Platte kann gleichzeitig erfolgen, so daß beim gemeinsamen Verkleben die Gesamtplatte mit zwei Metallschichten vorhanden ist. Die Zeit für die Herstellung von optischen Datenträgern kann also ebenso kurz sein, wie die Herstellung eines herkömmlichen optischen Datenträgers mit nur einer einzigen Metallschicht. Anders wie bei der erwähnten EP-A-0 608 358 sind die Metallisierungsschritte nicht nacheinander auszuführen, sondern können in entsprechenden Anlagen parallel erfolgen, so daß sich im Herstellprozeß keine Zeitverzögerung ergibt.

Vorzugsweise ist die Bildstruktur als Hologrammstruktur ausgebildet. Eine solche Hologrammstruktur ist relativ schwierig herzustellen und erhöht somit den Schutz gegen Raubkopien. Außerdem erregt ein Hologramm erhöhte Aufmerksamkeit, so daß einerseits die Hinweisfunktion auf Originalware gegeben ist und für den Käufer andererseits auch ein gewisser Kaufanreiz besteht.

Ein bevorzugtes Ausführungsbeispiel ist dadurch gekennzeichnet, daß der Datenträger eine Digital Versatile Disc (DVD) mit hoher Datendichte ist. Ein solcher optischer Datenträger ist vielseitig als Audio-, Video- oder Computerdatenträger zu verwenden. Er hat eine erhöhte Speicherkapazität, welche durch eine höhere Dichte der Pits, d.h. die Vertiefungen in der informationstragenden metallisierten Schicht, erreicht wird. Bei der DVD sind diese Pits flacher, schmaler und kürzer ausgeprägt als bei einer Compactdisc und beanspruchen weniger Platz. Im hier bevorzugten Single-Layer-Betrieb wird nur eine Informationsschicht genutzt, wodurch sich gemäß dem verwendeten Standard eine Speicherkapazität von 4,7 Gigabyte ergibt.

Ein Ausführungsbeispiel der Erfindung sowie ein relevanter Stand der Technik wird im folgenden anhand der Zeichnung erläutert. Darin zeigt:
- Figur 1: den Aufbau einer Compactdisc nach dem Stand der Technik,
- Figur 2: den Aufbau einer DVD gemäß der Erfindung,
- Figur 3: schematisch den Ablauf des Herstellungsverfahrens für eine DVD nach Figur 2, und
- Figur 4: das Herstellverfahren für die Prägewerkzeuge zum Herstellen der Hologramm-Halbseite und deren DVD-Halbseite.

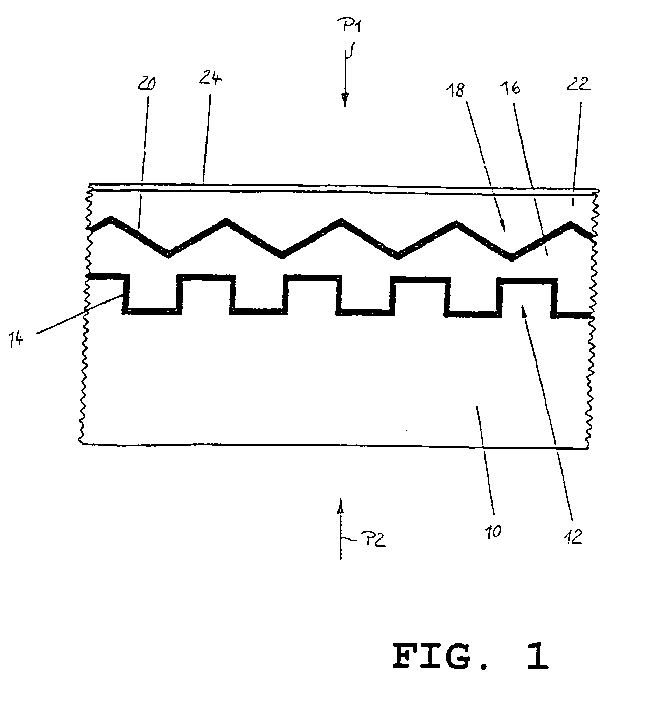

Figur 1 zeigt den Aufbau einer Compactdisc nach dem Stand der Technik, wie er in der EP-A-0 608 358 beschrieben ist. Auf einem Substrat 10 aus Polycarbonat mit einer typischen Stärke von 1,2 mm ist eine Pitstruktur 12 durch einen Prägestempel aufgebaut. Die Oberfläche dieser Pitstruktur 12 wird zusätzlich mit einer Metallschicht 14, beispielsweise durch einen Sputterprozeß, metallisiert. Auf diese Metallschicht 14 wird eine zusätzliche Schicht 16 aufgetragen, die aus thermoplastischem Material besteht. Die nach oben zeigende Fläche hat eine Hologrammstruktur, wie dies durch 18 angedeutet ist. Die Oberfläche dieser Hologrammstruktur 18 ist ebenfalls mit einer Metallschicht 20 versehen. Oberhalb der Schicht 20 ist eine Schutzlackschicht 22 angeordnet, deren Oberfläche 24 im allgemeinen teilweise bedruckt wird. In Blickrichtung des Pfeils P1 kann das Hologramm der Hologrammstruktur 18 betrachtet werden. Aus der Richtung des Pfeiles P2 wird die Pitstruktur 12 mit den digitalen Daten ausgelesen. Wie bereits erwähnt, ist der Herstellprozeß für die gezeigte Compactdisc aufwendig, da zwei Prägevorgänge an derselben Platte erfolgen müssen.

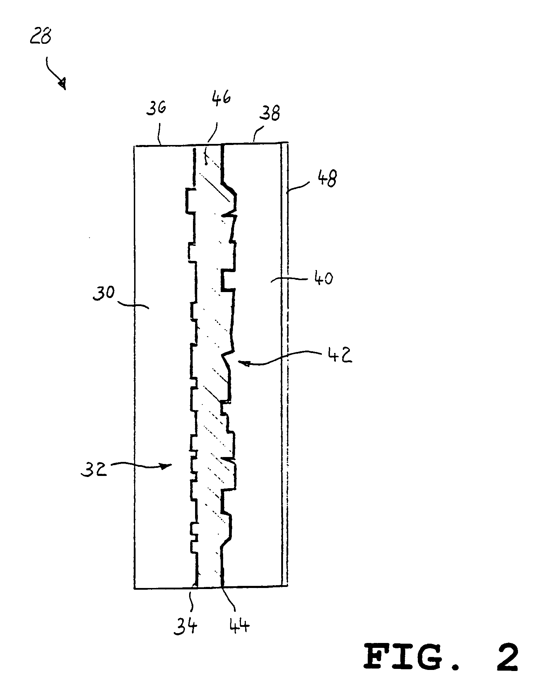

Figur 2 zeigt den Aufbau einer Digital Versatile Disc 28, die auch DVD genannt wird. Auf eine kreisförmige Polycarbonatscheibe 30 wird die Pitstruktur 32 mithilfe eines Prägewerkzeugs in einem Spritzgießverfahren erzeugt. Anschließend wird die Pitstruktur 32 mit einer Metallschicht 34 versehen, beispielsweise durch einen Sputterprozeß. Der Träger 30 zusammen mit der Pitstruktur 32 und der Metallisierung 34 wird als Halbplatte 36 bezeichnet. Sie hat etwa eine Dicke von 0,6 mm für eine DVD. Eine zweite Halbplatte 38 hat einen Träger 40 aus Polycarbonat, auf dem in einem Spritzgießvorgang mithilfe eines Prägewerkzeugs eine Hologrammstruktur 42 erzeugt wird. Anschließend wird diese Hologrammstruktur 42 mit einer Metallschicht 44 in einem Sputterprozeß versehen. Die einander zugewandten Metallschichten der beiden Halbplatten 36, 38 sind mithilfe einer Klebeschicht 46 verbunden. Vorzugsweise auf der Seite mit der Hologrammstruktur 42 ist eine Lackschicht 48 angeordnet, auf der im allgemeinen abschnittsweise ein Label oder ein Etikett aufgedruckt wird.

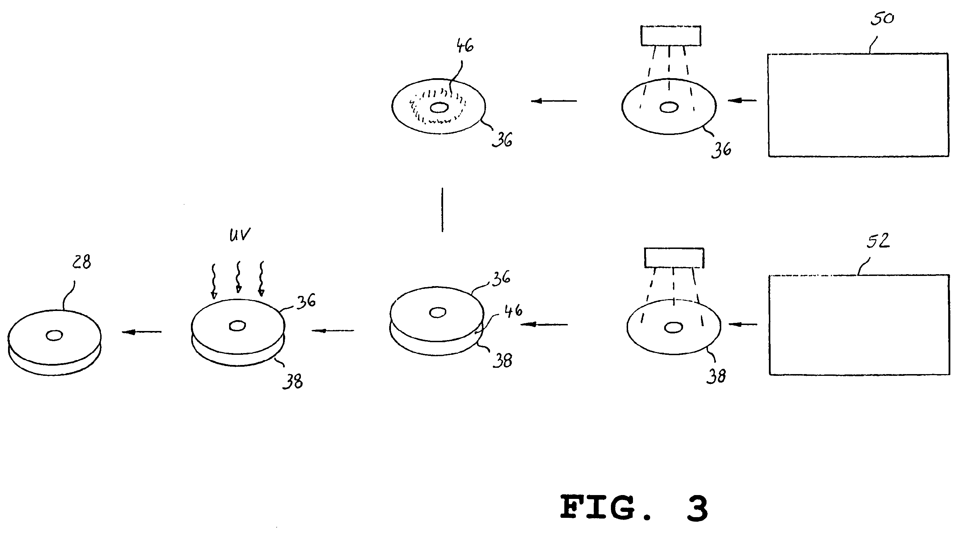

Figur 3 zeigt den Herstellprozeß für die DVD. In einer ersten Kunststoffspritzmaschine 50 wird die erste Halbplatte 36 erzeugt und anschließend in einem Sputterprozeß metallisiert. In einer zweiten Spritzgußmaschine 52 wird unter Verwendung eines Hologramm-Prägewerkzeuges die zweite Halbplatte 38 hergestellt und anschließend in einer Sputteranlage metallisiert. Auf die erste Halbplatte 36 wird der Kleber 46 im flüssigen Zustand aufgebracht. Anschließend werden beide Halbplatten 36, 38 so zusammengeführt, daß ihre metallisierten Seiten zueinander gerichtet sind. Beide Halbplatten 36, 38 werden gemeinsamen geschleudert, so daß sich eine gleichmäßig dicke Klebeschicht 46 ausbildet. Anschließend werden beide optischen Halbplatten 36, 38 ausgehärtet, beispielsweise durch Bestrahlung mit UV-Licht. Abschließend wird die so entstandene Gesamtplatte 28, welche eine Gesamtstärke von etwa 1,2 mm hat, einer optischen Kontrolle unterzogen und es erfolgen weitere Qualitätssicherungsmaßnahmen. Die beiden Spritzgußmaschinen 50, 52 sind parallel angeordnet und arbeiten im gleichen Arbeitstakt. Somit kann auch bei Massenfertigung eine hohe Stückzahl erzeugt werden, ohne daß bei einer einzigen Platte mehrere Prägevorgänge notwendig sind.

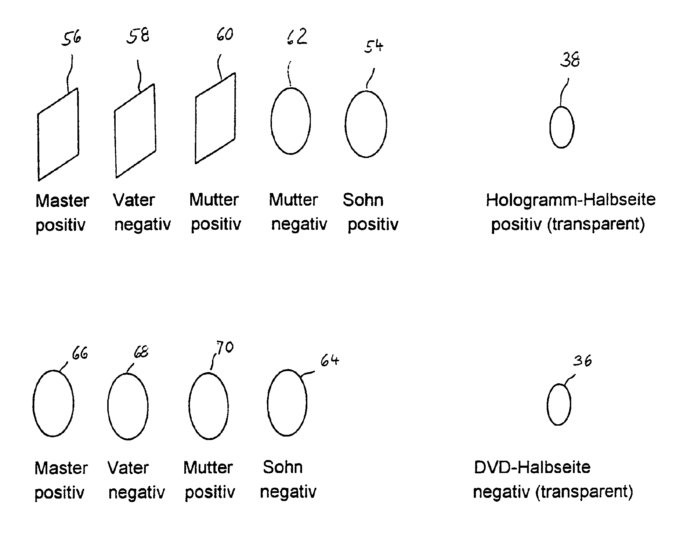

Figur 4 zeigt die für das gesamte Herstellverfahren der optischen Platte erforderlichen Prägewerkzeuge für die Hologrammstruktur und die Pitstruktur. In der oberen Zeile ist die Herstellung des Prägewerkzeuges 54 zum Erzeugen der Hologrammstruktur dargestellt. Von einem rechteckförmigen Master 56, auf dem eine Hologrammstruktur nach bekannter Art durch Laserbelichtung erzeugt wird, wird ein rechteckförmiger Abdruck erzeugt, der auch als Vater 58 bezeichnet wird. Im allgemeinen wird bei der Herstellung des Vaters 58 der Master 56 zerstört. Typischerweise hat der Master 56 eine Größe von 25,4 cm x 30,48 cm (10 inch x 12 inch). Typischerweise hat der Vater 58 eine Dicke von 300 µm. Vom Vater 58 wird durch galvanoplastische Abformung ein rechteckförmiger Abdruck erzeugt, der auch als Mutter 60 bezeichnet wird. Von dieser Mutter wird wiederum durch galvanoplastische Abformung eine weitere, jedoch kreisförmige Kopie 62 erzeugt, die Mutterkopie 62 hat typischerweise einen Durchmesser von 23 cm. Von dieser Mutter 62 wird durch galvanoplastische Abformung schließlich der Sohn 54 bzw. es werden mehrere Söhne erzeugt, die als Prägewerkzeuge dienen. Von diesem Prägewerkzeug 54 wird dann im Spritzgießverfahren die Hologrammstruktur aufgeprägt.

Zu erkennen ist, daß die positive Hologrammstruktur des Master 56 ebenfalls als positive Struktur in der Hologrammstruktur entsteht. Zum besseren Verständnis des Wechsels von positiver zu negativer Abformung wird beispielhaft angenommen, daß eine Erhebung als Hologrammstruktur auf dem Master 56 ausgebildet ist. Der Vater 58 hat dann eine negative Abformung, d.h. eine Vertiefung. Die vom Vater 58 abgeformte Mutter 60 hat eine Erhebung, die darauffolgende Mutterkopie 62 eine Vertiefung und der Sohn 54 wiederum eine Erhebung, die sich beim Prägevorgang als eine Vertiefung in der Halbplatte abformt. Da die Betrachtung der Hologrammstruktur von außen erfolgt, d.h. in Figur 2 von der Lackschicht 48 her gesehen, ist diese Vertiefung in der Halbplatte aus Betrachtersicht eine Erhebung, also eine positive Abformung.

Der Schritt zum Herstellen der Mutterkopie 62 aus der Mutter 60 erfüllt eine Doppelfunktion. Einerseits wird hiermit der Übergang von der Rechteckform zur Kreisform erzielt, die erforderlich ist, um im DVD-Herstellverfahren eingesetzt werden zu können. Zum anderen erfolgt hier ein zusätzlicher Kopierschritt, welcher einen Wechsel der Struktur von positiv nach negativ erbringt, um in der Gesamtzahl der Herstellschritte letztlich eine positive Hologrammstruktur auf der zweiten Halbplatte 38 zu erzeugen.

Die untere Zeile zeigt die an sich bekannte Herstellung des Prägewerkzeugs 64 zum Erzeugen der Pitstruktur auf der ersten Halbplatte 36. Aus dem kreisrunden Master 66 wird durch galvanoplastische Abformung der Vater 68 erzeugt, aus diesem die Mutter 70 und wiederum daraus der Sohn 64 bzw. mehrere Söhne, die als Prägewerkzeuge für den Produktionsprozeß dienen. Der weiter oben erwähnte Kopierzwischenschritt ist hier nicht erforderlich, da die lnformationsschicht auf der ersten Halbplatte 36 eine gegenüber dem Master 66 negative Struktur haben kann.

## Patentansprüche

1. Verfahren zum Herstellen eines plattenförmigen optischen Datenträgers,
bei dem eine erste Platte (36) in einem Spritzgießverfahren gepreßt und mit einer Metallschicht (34) versehen wird, die Daten in digitaler Form enthält,
eine zweite Platte (38) in einem Spritzgießverfahren gepreßt und mit einer Metallschicht (44) versehen wird, die eine für das Auge sichtbare Bildstruktur als Hologramm enthält,
und bei dem die erste und zweite Platte (36, 38) mit einander zugewandten Metallschichten (34, 44) miteinander verklebt werden, wobei das Prägewerkzeug (54) zum Herstellen der zweiten Platte (38) eine Hologrammstruktur trägt,
**dadurch gekennzeichnet, daß** das Prägewerkzeug (54) für die Hologrammstruktur hergestellt wird,
indem ein rechteckförmiger Master (56) in einem Fotoprozeß erzeugt wird,
vom Master (56) ein rechteckförmiger Abdruck als Vater (58) durch Galvanoabformung erzeugt wird,
vom Vater ein rechteckförmiger Abdruck als Mutter (60) durch Galvanoabformung erzeugt wird,
von der rechteckigen Mutter (60) ein kreisförmiger Abdruck als Mutterkopie (62) durch Galvanoabformung erzeugt wird,
von der Mutterkopie mindestens ein kreisförmiger Abdruck als Sohn (54) durch Galvanoabformung erzeugt wird,
und daß der Sohn (54) bzw. die Söhne als Prägewerkzeug verwendet werden.

2. Verfahren nach Anspruch 1, **dadurch gekennzeichnet, daß** der Datenträger eine Compactdisc, insbesondere eine DVD (28) mit hoher Datendichte ist.

3. Verfahren nach einem der vorhergehenden Ansprüche, **dadurch gekennzeichnet, daß** als Kleber (46) ein UV-empfindlicher Lack verwendet wird, der auf die Metallschicht (34) einer der beiden Platten aufgetragen wird.

4. Verfahren nach Anspruch 3, **dadurch gekennzeichnet, daß** zum Verteilen des Klebers beide Platten (36, 38) in Kontakt gebracht werden und einem gemeinsamen Schleuderprozeß unterzogen werden, und daß anschließend beide Platten (36, 38) einem gemeinsamen Aushärteprozeß, z.B. mit UV-Licht, unterzogen werden.

5. Verfahren nach einem der vorhergehenden Ansprüche, **dadurch gekennzeichnet, daß** das Prägewerkzeug (64) zum Herstellen der ersten Platte (36) eine Pitstruktur trägt.

6. Anlage zum Herstellen eines plattenförmigen optischen Datenträgers, unter Anwendung des Verfahrens nach einem der vorhergehenden Ansprüche 1 bis 5,
mit einer ersten Spritzgußvorrichtung (50), die eine erste Platte (36) in einem Spritzgießverfahren unter Verwendung eines Prägewerkzeugs mit einer Pitstruktur, die Daten in digitaler Form enthält, preßt,
wobei die geprägte Oberfläche der ersten Platte (36) in einer Metallisierungsanlage mit einer Metallschicht (34) versehen wird,
mit einer zweiten Spritzgußvorrichtung (52), die eine zweite Platte (38) mit einem Spritzgießverfahren unter Verwendung eines Prägewerkzeugs mit einer für das Auge sichtbare Bildstruktur preßt,
wobei die geprägte Oberfläche der zweiten Platte (38) in einer Metallisierungsanlage mit einer Metallschicht (44) versehen wird,
und mit einer Klebeschicht, mit der die erste und die zweite Platte (36, 38) mit einander zugewandten Metallschichten (34, 44) miteinander verklebt werden.

7. Anlage zum Anspruch 6, **dadurch gekennzeichnet, daß** die erste Spritzgußvorrichtung (50) und die zweite Spritzgußvorrichtung (52) im gleichen Zeittakt arbeiten.

8. Anlage nach Anspruch 6 oder 7, **dadurch gekennzeichnet, daß** das Prägewerkzeug für die zweite Platte eine Hologrammstruktur enthält.

## Claims

1. Method of producing an optical data carrier in disc form,
in which a first disc (36) is pressed by an injection moulding process and is provided with a metal layer (34) which contains data in digital form,
a second disc (38) is pressed by an injection moulding process and is provided with a metal layer (44) which contains an image structure visible to the eye in the form of a hologram,
and in which the first and second discs (36, 38) are bonded together by metal layers (34, 44) which face towards one another, the moulding tool (54) for producing the second disc (38) carrying a hologram structure,
**characterised in that** the moulding tool (54) for the hologram structure is produced by producing a rectangular master (56) by a photographic process, making a rectangular copy of the master (56) by electroforming to give a father (58),
producing a rectangular copy of the father by electroforming to give a mother (60),
producing a circular copy of the rectangular mother (60) by electroforming to give a copy mother (62)
making at least one circular copy of the copy mother to give a son (54),
and **in that** the son (54) or sons are used as moulding tools.

2. Method according to claim 1, **characterised in that** the data carrier is a compact disc, and in particular a DVD (28) having a high data density.

3. Method according to either of the foregoing claims, **characterised in that** what is used as an adhesive (46) is a UV-sensitive lacquer which is applied to the metal layer (34) on one of the two discs.

4. Method according to claim 3, **characterised in that**, to distribute the adhesive, the two discs (36, 38) are brought into contact and are subjected to a spinning process for centrifugal purposes in unison, and **in that** the two discs (36, 38) are then subjected to a shared curing process, e.g. by means of UV light.

5. Method according to one of the foregoing claims, **characterised in that** the moulding tool for producing the first disc (36) carries a pit structure.

6. System for producing an optical data carrier in disc form, using the method according to one of the foregoing claims 1 to 5,
having a first injection moulding apparatus (50) which presses a first disc (36) by an injection moulding process using a moulding tool having a pit structure which contains data in digital form,
the moulded surface of the first disc (36) being provided with a metal layer (34) in a metallising system,
having a second injection moulding apparatus (52) which presses a second disc (38) by an injection moulding process using a moulding tool having an image structure which is visible to the eye,
the moulded surface of the second disc (38) being provided with a metal layer (44) in a metallising system.
and with a layer of adhesive by which the first and second discs (36, 38) are bonded together by metal layers (34, 44) which face towards one another.

7. System according to claim 6, **characterised in that** the first injection moulding apparatus (50) and the second injection moulding apparatus (52) operate at the same rate over time.

8. System according to claim 6 or 7, **characterised in that** the moulding tool for the second disc contains a hologram structure.

## Revendications

1. Procédé de fabrication d'un support de données optique en forme de plaque,
où une première plaque (36) est fabriquée par un procédé de moulage par injection et comporte une couche métallique (34) comprenant des données en forme numérique.,
une deuxième plaque (38) est fabriquée par un procédé de moulage par injection et est dotée d'une couche métallique (44) qui comprend une structure d'image visible à l'oeil nu en tant qu'hologramme,
et où les première et deuxième plaques (36, 38) sont collées l'une à l'autre avec les couches métalliques (34, 44) tournées l'une vers l'autre, l'outil de matriçage (54) pour fabriquer la deuxième plaque (38) portant une structure holographique,
**caractérisé en ce que** l'outil de matriçage (54) pour la structure holographique est réalisé
en créant une pièce maîtresse (56) de forme rectangulaire dans un processus photographique,
en créant à partir de la pièce maîtresse (56) une empreinte rectangulaire en tant que père (58) par galvanoplastie,
en créant à partir du père une empreinte rectangulaire en tant que mère (60) par galvanoplastie,
en créant à partir de la mère rectangulaire (60) une empreinte circulaire en tant que copie mère (62) par galvanoplastie,
en créant à partir de la copie mère au moins une empreinte circulaire en tant que fils (54) par galvanoplastie,
et **en ce que** le fils (54) ou les fils est ou sont utilisés en tant qu'outil de matriçage.

2. Procédé selon la revendication 1, **caractérisé en ce que** le support de données est un disque compact, en particulier un DVD (28) avec une densité de données élevée.

3. Procédé selon l'une quelconque des revendications précédentes, **caractérisé en ce que** l'adhésif (46) utilisé est un vernis sensible aux UV qui est appliqué sur la couche métallique (34) d'une des deux plaques.

4. Procédé selon la revendication 3, **caractérisé en ce que**, pour la répartition de l'adhésif, les deux plaques (36, 38) sont mises en contact et soumises à un processus commun de centrifugation, et **en ce que** les deux plaques (36, 38) sont ensuite soumises à un processus commun de durcissement, par exemple par la lumière UV.

5. Procédé selon l'une quelconque des revendications précédentes, **caractérisé en ce que** l'outil de matriçage (54) pour fabriquer la première plaque (36) porte une structure creusée.

6. Installation pour fabriquer un support de données optique en forme de plaque, en appliquant le procédé selon l'une quelconque des revendications 1 à 5,
avec un premier dispositif de moulage par injection (50) qui fabrique une première plaque (36) par un procédé de moulage par injection en utilisant un outil de matriçage avec une structure creusée qui comprend des données en forme numérique,
la surface matricée de la première plaque (36) étant dotée d'une couche métallique (34) dans une installation de métallisation,
avec un deuxième dispositif de moulage par injection (52) qui fabrique une deuxième plaque (38) par un procédé de moulage par injection en utilisant un outil de matriçage avec une structure d'image visible à l'oeil nu,
la surface matricée de la deuxième plaque (38) étant dotée d'une couche métallique (44) dans une installation de métallisation,
et avec une couche d'adhésif grâce à laquelle les première et deuxième plaques (36, 38) sont collées l'une à l'autre avec les couches métalliques (34, 44) tournées l'une vers l'autre.

7. Installation selon la revendication 6, **caractérisée en ce que** le premier dispositif de moulage par injection (50) et le deuxième dispositif de moulage (52) travaillent dans le même cycle de temps.

8. Installation selon la revendication 6 ou 7, **caractérisée en ce que** l'outil de matriçage pour la deuxième plaque comprend une structure holographique.
